# EUROPEAN PATENT SPECIFICATION

(11) **EP 2 550 475 B1**
(45) Date of publication and mention of the grant of the patent: **13.07.2016**
(21) Application number: 11715060.7
(22) Date of filing: 14.03.2011
(51) Int. Cl.: F24D 19/00, F28F 9/02, F16L 27/08, F28F 9/26

(54) **SWIVEL-TYPE COUPLING DEVICE FOR A RADIATOR**
DREHKOPPLUNGSVORRICHTUNG FÜR EINEN STRAHLER
DISPOSITIF D'ACCOUPLEMENT DE TYPE PIVOTANT POUR UN RADIATEUR

(30) Priority: 22.03.2010 IT MI20100081 U
(43) Date of publication of application: 30.01.2013
(73) Proprietor: Deltacalor S.r.L., 23801 Calolziocorte (Lecco) (IT)
(72) Inventor: RIZZO, Claudio, I-20052 Monza (Monza Brianza) (IT)
(74) Representative: Cosenza, Simona
(86) International application number: PCT/IT2011/000071
(87) International publication number: WO 2011/117898

(56) References cited:
- EP-A2- 1 211 472
- US-A- 3 055 685
- US-A- 5 816 624

## Description

### Technical field of invention

The present invention relates to a swivel-type coupling device for a domestic radiator unit, particularly, though not exclusively, for a hot water radiator unit, which enables relative rotation between heating fluid conveying conduits of the radiator unit connected thereto, whilst maintaining fluid continuity and fluid-tight sealing therebetween.

### Background art

A swivel-type coupling device of the kind mentioned above is disclosed, e.g., in the published European Patent Application No. 1 211 472 A1, in the name of the same Applicant of the present application. The structure of this known coupling device comprises a tubular male member, which is in fluid connection with a first heating fluid conveying conduit of the radiator unit, and a tubular female member, which is in fluid connection with a second heating fluid conveying conduit of the radiator unit, and into which the tubular male member is inserted. The tubular male member and the tubular female member are attached by welding to the first heating fluid conveying conduit and to the second heating fluid conveying conduit, respectively, of the radiator unit, and they are connected to each other by means of a connecting ring which allows a relative rotation between the two members. Annular seals are provided between the exterior surface of the tubular male member and the interior surface of the tubular female member.

This coupling device has the disadvantage that the operations for assembling the radiator unit are rather time consuming and complicated to perform and, therefore, they negatively affect the cost of the radiator unit. The reason for this is to be found in the structure of the coupling device, which requires that the tubular male and female coupling members are connected to each other before they can be attached to the heat conveying conduits of the radiator unit.

As a result, after connecting together the tubular male and female members of the coupling device, it is then necessary to perform a further assembling operation to attach the same to the heating fluid conveying conduits of the radiator unit.

This is a rather onerous task because it requires to provide a special and separate welding operation, which adds to that already necessary for joining together the parts forming the heating fluid conveying conduits of the radiator unit.

A swivel-type coupling device comprising the features of the preamble of claim 1 is known from US 5816624. The device there would likewise be unable to allow easy assembly of the radiator.

The object of the present invention is to obviate the drawbacks of the prior art by the provision of a swivel-type coupling device having an improved structure, which allows the radiator to be assembled in a more simple and economic manner.

### Summary of invention

According to the present invention, this object is achieved with a swivel-type coupling device enabling relative rotation between heating fluid conveying conduits connected thereto, comprising:
- a first cup-shaped member having an axial bore extending therethrough and being connectable to a first of said heating fluid conveying conduits,
- a second cup-shaped member having an axial bore extending therethrough and being connectable to a second of said heating fluid conveying conduits,
- said first and second cup-shaped members being coaxially arranged with their hollow portions facing one another, in order to form an axial cavity which communicates with said first and second heating fluid conveying conduits,
- a bushing arranged to slide axially within said axial cavity and capable of providing a fluid-tight seal of said axial cavity,
- and a resilient element interposed between said bushing and said first cup-shaped member,
characterised in that
- the bushing (14) is provided with a radially inwardly extending flange at the open end thereof proximal to the second cup-shaped member and said resilient element (17) is interposed between said flange of the bushing (14) and said first cup-shaped member (11).

### Brief description of drawings

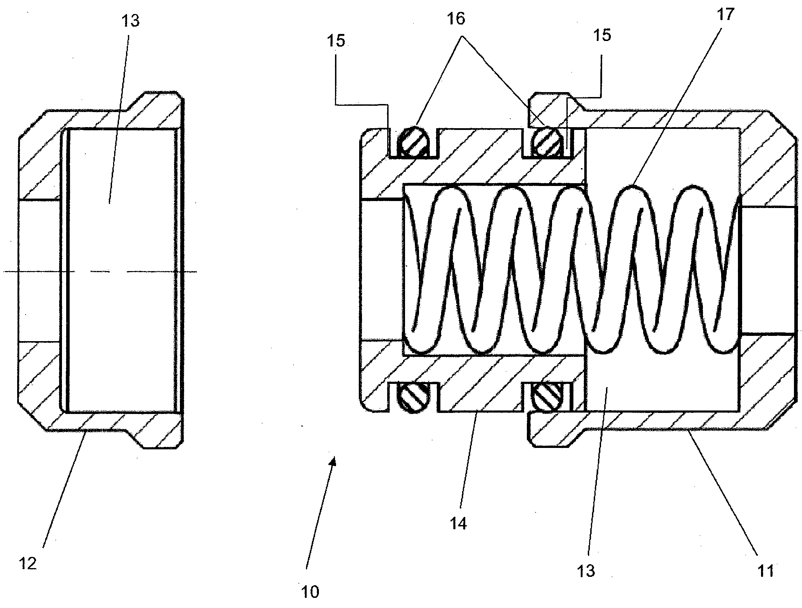

The present invention will now be described by way of example with reference to the embodiment illustrated in the single figure of the attached drawing, in which the coupling device is shown in longitudinal section.

### Detailed description of an embodiment of invention

With reference to the figure of the drawing, there is shown a swivel-type coupling device according to the present invention, generally designated by 10. This coupling device enables relative rotation between heating fluid conveying conduits of a domestic radiator unit (not shown) connected thereto.

As can be noticed, the coupling device 10 comprises a first cup-shaped member 11, which is provided with an axial bore extending therethrough and is intended to be connected to a first heating fluid conveying conduit of a radiator unit, and a second cup-shaped member 12, which is also provided characterised in that said bushing in provided with a radially inwardly extending flange at one open end thereof and said resilient element is interposed between said flange of the with an axial bore extending therethrough, but is intended to be connected to a second heating fluid conveying conduit of the radiator unit. Conveniently, the cup-shaped members 11 and 12 can be attached to the heating fluid conveying conduits of the radiator unit by welding.

The cup-shaped members 11 and 12 are coaxially arranged with their hollow portions 13 facing one another in order to define, at least partially, an axial cavity which is in communication with the first and second heating fluid conveying conduits of the radiator unit, and is adapted to receive a bushing 14 therein.

The bushing 14 is arranged to slide axially within said axial cavity and is provided on its exterior surface with two spaced apart annular grooves 15. In each groove 15 an elastomeric seal 16 is located which assures a fluid-tight seal between the bushing 14 and the interior surface of the cup-shaped members 11 and 12. The bushing 14 is provided with a radially inwardly extending flange at one open end thereof In order to keep the bushing 14 in a substantially centred position inside the axial cavity there is provided a resilient member 17 which is located coaxially within the bushing 14 and is interposed between the radially inwardly extending flange of the bushing 14 and the cup-shaped member 11. The resilient member 17 is configured to allow fluid flow through the bushing 14.

The cup-shaped members 11 and 12 are joined together by means of the bushing 14. In the assembly of the coupling device 10 the bushing 14 can be pushed inside the hollow portion of the cup-shaped member 11, thus allowing the cup-shaped members 11 and 12 to be arranged in a coaxial coupling position for connecting together the heating fluid conveying conduits of the radiator unit. The resilient member 17 assures that the bushing 14 can return to its original position to connect together the cup-shaped elements 11 and 12 once these are arranged in the coupling position.

From the foregoing it can be understood that the swivel-type coupling device according to the present invention obviates the drawback of the known couplings devices of the same type. In particular, because the bushing 14 is movable axially within the axial cavity, the cup-shaped members 11 and 12 can be easily arranged in the coaxial coupling position in the assembly of the coupling device, even if they are already connected to the heating fluid conveying conduits of the radiator unit. In this manner, the radiator can be completely assembled without being necessary a subsequent welding operation to connect the cup-shaped members 11 and 12 of the coupling device to the heat conveying conduits of the radiator unit.

## Claims

1. A swivel-type coupling device (10) enabling relative rotation between heating fluid conveying conduits connected thereto, comprising:
- a first cup-shaped member (11) having an axial bore extending therethrough and being connectable to a first of said heating fluid conveying conduits,
- a second cup-shaped member (12) having an axial bore extending therethrough and being connectable to a second of said heating fluid conveying conduits,
- said first and second cup-shaped members (11, 12) being coaxially arranged with their hollow portions (13) facing one another, in order to form an axial cavity which communicates with said first and second heating fluid conveying conduits,
- a bushing (14) arranged to slide axially within said axial cavity and capable of providing a fluid-tight seal of said axial cavity,
- and a resilient element (17) interposed between said bushing (14) and said first cup-shaped member (11),
**characterised in that** said bushing (14) is provided with a radially inwardly extending flange at the open end thereof proximal to the second cup-shaped member (12) and said resilient element (17) is interposed between said flange of the bushing (14) and said first cup-shaped member (11).

2. A swivel-type coupling according to claim 1, **characterised in that** said bushing (14) is provided on its exterior surface with two spaced apart annular grooves (15) wherein elastomeric seals 16 are located which assure a fluid-tight seal between the pin 14 and the interior surface of the cup-shaped elements 11 and 12.

## Patentansprüche

1. Drehkopplungsvorrichtung (10), die die Relativdrehung zwischen damit verbundenen, Heizfluid führenden Leitungen ermöglicht, umfassend:
- ein erstes becherförmiges Element (11), das eine sich hierdurch erstreckende Axialbohrung aufweist und mit einer ersten Heizfluid führenden Leitung verbunden werden kann,
- ein zweites becherförmiges Element (12), das eine sich hierdurch erstreckende Axialbohrung aufweist und mit einer zweiten Heizfluid führenden Leitung verbunden werden kann,
- wobei das erste und das zweite becherförmige Element (11, 12) mit ihren sich gegenüberliegenden, hohlen Abschnitten (13) koaxial angeordnet sind, um einen koaxialen Hohlraum zu bilden, der mit der ersten und der zweiten Heizfluid führenden Leitung in Verbindung steht,
- eine Buchse (14), die angeordnet ist, um axial innerhalb des axialen Hohlraums zu gleiten und in der Lage ist, eine fluiddichte Abdichtung des axialen Hohlraums bereitzustellen,
- und ein elastisches Element (17), das zwischen der Buchse (14) und dem ersten becherförmigen Element (11) eingesetzt ist,
**dadurch gekennzeichnet, dass** die Buchse (14) mit einem sich radial nach innen erstreckenden Flansch an dem offenen Ende derselben, nahe dem zweiten becherförmigen Element (12) versehen ist, und das elastische Element (17) zwischen dem Flansch der Buchse (14) und dem ersten becherförmigen Element (11) eingesetzt ist.

2. Drehkopplungsvorrichtung nach Anspruch 1, **dadurch gekennzeichnet, dass** die Buchse (14) auf ihrer Außenfläche mit zwei beabstandeten Ringnuten (15) versehen ist, wobei elastomere Dichtungen 16 angeordnet sind, die eine fluiddichte Abdichtung zwischen dem Zapfen 14 und der Innenfläche der becherförmigen Elemente 11 und 12 gewährleisten.

## Revendications

1. Dispositif d'accouplement de type pivotant (10) permettant une rotation relative entre des conduits de transport de fluide chauffant connectés à celui-ci, comprenant :
- un premier élément en forme de coupe (11) ayant un alésage axial s'étendant à travers celui-ci et pouvant être connecté à un premier desdits conduits de transport de fluide chauffant,
- un deuxième élément en forme de coupe (12) ayant un alésage axial s'étendant à travers celui-ci et pouvant être connecté à un deuxième desdits conduits de transport de fluide chauffant,
- lesdits premier et deuxième éléments en forme de coupe (11, 12) étant agencés de manière coaxiale avec leurs portions creuses (13) l'une face à l'autre, de manière à former une cavité axiale qui communique avec lesdits premier et deuxième conduits de transport de fluide chauffant,
- une bague (14) agencée pour coulisser axialement à l'intérieur de ladite cavité axiale et capable de fournir une étanchéité aux fluides de ladite cavité axiale,
- et un élément élastique (17) interposé entre ladite bague (14) et ledit premier élément en forme de coupe (11), **caractérisé en ce que** ladite bague (14) est munie d'une bride s'étendant radialement vers l'intérieur à l'extrémité ouverte de celle-ci proximale du deuxième élément en forme de coupe (12) et ledit élément élastique (17) est interposé entre ladite bride de la bague (14) et ledit premier élément en forme de coupe (11).

2. Accouplement de type pivotant selon la revendication 1, **caractérisé en ce que** ladite bague (14) est pourvue sur sa surface extérieure de deux rainures annulaires espacées (15) dans lesquelles sont disposés des joints élastomères 16 qui garantissent un joint étanche aux fluides entre l'axe 14 et la surface intérieure des éléments en forme de coupe 11 et 12.
